# FASCICULE DE BREVET EUROPEEN

(11) **EP 3 769 067 B1**
(45) Date de publication et mention de la délivrance du brevet: **12.07.2023**
(21) Numéro de dépôt: 19718902.0
(22) Date de dépôt: 20.03.2019
(51) Int. Cl.: G01P 1/02, G01M 15/14, F01D 25/28, G01M 9/06

(54) **DISPOSITIF DE MESURE DES CARACTERISTIQUES D'UN FLUX D'AIR**
VORRICHTUNG ZUR MESSUNG DER EIGENSCHAFTEN EINES LUFTSTROMS
DEVICE FOR MEASURING THE CHARACTERISTICS OF AN AIR FLOW

(30) Priorité: 22.03.2018 FR 1852500
(43) Date de publication de la demande: 27.01.2021
(73) Titulaire: SAFRAN AIRCRAFT ENGINES, 75015 Paris (FR)
(72) Inventeur: VERNIAU, Jean-Luc, 77550 MOISSY-CRAMAYEL (FR); POLO FILISAN, Gilles, 77550 MOISSY-CRAMAYEL (FR); SOZUAN, Adnan, 77550 MOISSY-CRAMAYEL (FR); PARIS, Simon, 64230 CAUBIOS-LOOS (FR)
(74) Mandataire: Ernest Gutmann - Yves Plasseraud S.A.S.
(86) Numéro de dépôt international: PCT/FR2019/050641
(87) Numéro de publication internationale: WO 2019/180383

(56) Documents cités:
- FR-A1- 3 036 735
- FR-A1- 3 043 203
- FR-A1- 3 043 464
- FR-A1- 3 051 908
- US-A- 5 076 108

## Description

### DOMAINE

La présente invention concerne un dispositif de mesure de caractéristiques d'un écoulement d'air dans une turbomachine, notamment dans une turbomachine d'essai.

### CONTEXTE

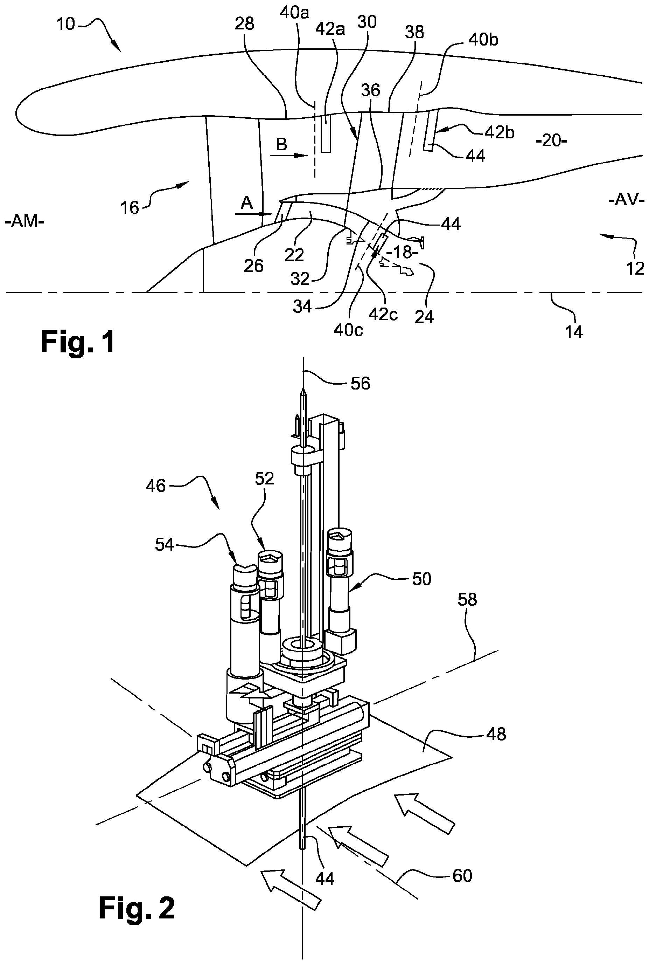

Classiquement, un turboréacteur à double flux 10, comme l'illustre la figure 1, est constitué d'une turbine à gaz 12 d'axe de révolution 14 entrainant une roue de soufflante 16 carénée, celle-ci étant généralement placée à l'amont du turboréacteur. La masse d'air aspirée par le moteur est divisée en un flux d'air primaire (flèche A), qui circule dans la turbine à gaz 12 ou corps primaire, et un flux d'air secondaire (flèche B), qui est issu de la soufflante 16 et qui entoure annulairement le corps primaire, les flux d'air primaire et secondaire étant concentriques et évoluant dans une veine annulaire primaire 18 et une veine annulaire secondaire 20 respectivement 8.

D'une manière bien connue, le flux d'air primaire (flèche A) est généralement compressé par un compresseur basse pression 22 puis par un compresseur haute pression 24 comprenant chacun des aubages fixes 26 et mobiles disposés alternativement dans la direction de déplacement du flux. L'arbre du compresseur basse pression est relié à la roue de soufflante 4 et est entrainé en rotation par l'arbre d'une turbine basse pression agencée en aval (non représenté). L'arbre du compresseur haute pression est entrainé en rotation par l'arbre d'une turbine haute pression agencée en sortie d'une chambre de combustion et en amont de la turbine basse pression (non représentées).

Dans un tel turboréacteur à double corps, on désigne habituellement par carter de soufflante, la paroi annulaire externe 28 entourant la roue de soufflante 16 et par carter intermédiaire 30, un élément structural de la turbomachine intercalé axialement entre les compresseurs, basse pression 22 et, haute pression 24 et qui traverse les veines annulaire primaire 18 et secondaire 20. Ce carter intermédiaire 30 comprend deux parois annulaires radialement interne 32 et externe 34 délimitant, respectivement, intérieurement et extérieurement la veine annulaire 18 d'écoulement du flux d'air primaire, et deux parois annulaires radialement interne 36 et externe 38 délimitant intérieurement et extérieurement la veine annulaire secondaire 20, respectivement.

Dans le cadre du développement d'un turboréacteur, il est nécessaire de tester les performances de celui-ci afin de le certifier. Des turbomachines de développement sont ainsi prévues à cet effet. Sur ces turbomachines, un nombre important de mesures est effectué. Sont mesurées, en particulier, les caractéristiques du flux aérodynamique à différentes positions axiales ou plans 40a, 40b, 40c de mesures. De plus, on souhaite pouvoir faire des mesures en plusieurs points d'un plan de mesure.

A cette fin, des organes de mesure, communément appelés mesureurs, agencés au niveau des plans de mesures sont couramment utilisés pour caractériser le flux aérodynamique en mesurant en fonctionnement des paramètres tels que par exemple la pression et la température. Un tel organe 42a, 42b, 42c comprend une tige 44 portant des moyens de mesures des caractéristiques de l'écoulement d'air. Il comprend également une extrémité radialement externe et une extrémité radialement interne par rapport à l'axe de rotation 14 de la turbomachine. L'extrémité radialement externe de l'organe 42a, 42b, 42c est portée par un carter de la turbomachine tandis que l'extrémité radialement interne agencée à l'intérieur de la veine est libre et placée dans le flux d'air de la turbomachine dont on souhaite mesurer les caractéristiques d'écoulement du flux d'air.

Plus spécifiquement, l'extrémité radialement externe est reliée à une embase de fixation au carter permettant de supporter la tige 44 dans une direction radiale fixe donnée. Lorsque l'on souhaite effectuer des mesures à des positions radiales différentes, il est nécessaire d'arrêter la turbomachine, de repositionner la tige dans son embase à une position différente et de remettre en fonctionnement la turbomachine. Ces étapes s'avèrent longues et compliquent les phases de tests. Egalement, au passage de certaines vitesses de rotation, de la soufflante notamment lorsque la tige 44 s'étend dans la veine annulaire d'air secondaire, la tige 44 est susceptible d'entrer en résonance, ce qui peut conduire à des fissures dans la tige 44 de mesure et peut impacter son intégrité mécanique. Dans des cas extrêmes, la formation de criques ou de fissures consécutives aux vibrations peut conduire à la dislocation partielle ou totale de la tige 44. Les débris ainsi libérés circulent dans la veine et peuvent endommager des parties de la turbomachine qui sont agencées en aval.

Dans des systèmes connus, il a notamment été proposé de monter la tige sur des moyens de déplacement à coulissement radial et sur des moyens de déplacement en direction tangentielle ou circonférentielle. Toutefois, ce type de montage ne permet pas de réaliser une étanchéité optimale à la circulation d'air de la veine d'air de sorte que la mesure impacte les caractéristiques de l'écoulement d'air qu'elle doit mesurer.

Le document FR 3 051 908 A1 décrit un dispositif de mesure des caractéristiques d'un flux d'air d'une veine annulaire de turbomachine selon l'état de la technique.

L'invention a notamment pour but d'apporter une solution simple, efficace et économique aux problèmes de l'art antérieur décrit précédemment.

### RESUME DE L'INVENTION

Ainsi, l'invention propose un dispositif de mesure des caractéristiques d'un flux d'air d'une veine annulaire de turbomachine, comprenant une tige s'étendant selon un premier axe donné, portant des moyens de mesure de caractéristiques d'un flux d'air et engagée à coulissement à étanchéité dans une première partie tubulaire se prolongeant par une seconde partie tubulaire traversant à étanchéité selon le premier axe un coulisseau monté à coulissement dans une coulisse selon un second axe perpendiculaire audit premier axe, ladite tige étant engagée avec un jeu annulaire dans ladite seconde partie tubulaire.

Selon l'invention, l'étanchéité est réalisée en deux endroits différents sur deux axes de déplacement différents de la tige, ce qui permet de simplifier la conception du dispositif de mesure. En particulier, une étanchéité est réalisée vis-à-vis de la coulisse par l'intermédiaire de la seconde partie tubulaire et l'étanchéité à l'air circulant dans la seconde partie tubulaire est réalisée directement sur la tige elle-même.

Selon une autre caractéristique de l'invention, le coulisseau est de préférence cylindrique et comprend une première partie de coulisseau à tubes télescopiques et une seconde partie de coulisseau à tubes télescopiques, lesdites première et seconde parties de coulisseau à tubes télescopiques étant fixées à étanchéité par une extrémité axiale à ladite seconde partie tubulaire.

L'utilisation de coulisseau à tubes télescopiques permet de bien répartir la pression de l'air entrant par le jeu annulaire prévu entre la tige et la seconde partie tubulaire sur les différents tubes constitutifs de la première partie de coulisseau et la seconde partie de coulisseau.

La première partie tubulaire peut comprendre une première platine de support supportant en rotation autour du premier axe un premier actionneur de déplacement à translation de la tige selon ledit premier axe.

Afin d'assurer un refroidissement de la première platine, celle-ci peut comprendre un circuit apte à permettre une circulation d'air et destiné à être relié à des moyens d'alimentation en air. La régulation thermique de la première platine permet ainsi de limiter l'échauffement des pièces qui y sont fixées. On comprend que la première platine est de préférence également tubulaire, c'est-à-dire qu'elle comprend au moins une ouverture centrale de passage de la tige.

Dans une configuration particulière, une première pièce tubulaire et une seconde pièce tubulaire coaxiales au premier axe sont montées autour de la tige, la première pièce tubulaire entourant la seconde pièce tubulaire et délimitant avec celle-ci un circuit apte à permettre une circulation d'un liquide de refroidissement lequel est destiné à être relié à des moyens d'alimentation en liquide de refroidissement. Cet agencement permet en combinaison avec le circuit d'air de refroidissement d'encore mieux réguler la température du dispositif.

Avantageusement, la première pièce tubulaire est insérée dans une ouverture de la première platine et est rendue solidaire de ladite première platine.

Pour assurer le guidage à étanchéité de la tige et limiter les remontées de gaz chauds dans la première partie tubulaire, cette dernière peut loger intérieurement un tube de guidage dans lequel la tige est montée à glissement ajusté.

Le tube de guidage peut comprendre un rebord annulaire monté serré entre un épaulement annulaire d'une première extrémité de la seconde pièce tubulaire et un écrou de serrage vissé à une seconde extrémité de ladite seconde pièce.

Avantageusement, un joint d'étanchéité peut être monté autour de la tige et compressé selon ledit premier axe entre deux bagues, lesdites deux bagues et le joint étant intercalés entre ledit rebord du tube de guidage et l'écrou.

Pour réaliser le déplacement de la seconde partie et de la première partie selon le second axe, la seconde partie tubulaire est rendue solidaire d'une seconde platine montée à déplacement selon le second axe par l'intermédiaire d'un système à crémaillère.

Une semelle peut être fixée à une face de la coulisse opposée à celle supportant la première partie tubulaire, ladite semelle comprenant une ouverture traversée par la tige et un circuit apte à permettre une circulation d'un liquide de refroidissement et destiné à être relié à des moyens d'amenée d'un fluide de refroidissement.

Avantageusement, la coulisse comprend un circuit apte à permettre une circulation d'air et relié à des moyens d'alimentation en air de refroidissement.

L'invention concerne également une veine d'écoulement d'air, pour turbomachine, comprenant deux parois annulaires interne et externe coaxiales, et un dispositif tel que décrit ci-dessus, la coulisse étant fixée sur une face radialement externe de la paroi annulaire externe et la tige traversant ladite paroi annulaire externe de manière à ce que son extrémité libre soit agencée entre lesdites deux parois annulaires interne et externe.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 déjà décrite, est une demi-vue schématique en coupe axiale d'un turboréacteur d'aéronef d'un type connu ;
- la figure 2 est une vue schématique en perspective d'un dispositif selon l'invention pour effectuer des mesures des caractéristiques d'un flux d'air dans une veine annulaire d'écoulement d'air ;
- La figue 3 est vue schématique en coupe du dispositif selon l'invention ;
- La figure 4 est un agrandissement de la zone délimitée en pointillée sur la figure 4A ;
- La figure 5 est une illustration schématique en perspective et éclatée d'une partie du dispositif selon l'invention ;
- La figure 6 est une vue schématique en perspective de la tige et des moyens d'étanchéité autorisant le coulissement de celle-ci en direction radiale ;
- La figure 7 est une vue schématique illustrant l'écrasement d'un joint pour l'étanchéité à coulissement de la tige ;
- Les figures 8A, 8B et 8C sont des vues schématiques des moyens permettant un déplacement dans une direction tangentielle de la tige de mesure ;
- Les figures 9A, 9B et 9C sont des vues schématiques en coupe longitudinale de la coulisse et du coulisseau cylindrique permettant un déplacement dans un la direction tangentielle ;
- Les figures 10A, 10B, 11A et 11B sont des vues schématiques en coupe selon un plan perpendiculaire à une direction radiale illustrant l'intérieur de la coulisse ;
- Les figures 12A, 12B et 12C sont des vues schématiques en perspectives et selon différents plans de coupe en direction radiales des moyens de refroidissement par circulation d'un liquide ;
- La figure 13 est une vue schématique en perspective des moyens de refroidissement par circulation d'air d'une platine de supportant à translation radiale de la tige de mesure.

### DESCRIPTION DETAILLEE

La figure 2 représente un dispositif 46 selon l'invention porté par un carter externe 48 de la turbomachine et comprenant trois actionneurs 50, 52, 54, un premier actionneur 52 permettant le déplacement de la tige 44 de mesure selon un premier axe 56 s'étendant radialement, un second actionneur 54 permettant le déplacement en rotation de la tige 44 autour dudit premier axe 56 et un troisième actionneur 54 permettant le déplacement de la tige 44 selon un second axe 58 perpendiculaire au premier axe 56. Le second axe 58 s'étend dans une direction perpendiculaire à la direction radiale qui est celle du premier axe 56 et perpendiculairement à la direction longitudinale 60 parallèle à l'axe 14 de rotation de la turbomachine, le flux d'air s'écoulant dans un sens la direction longitudinale.

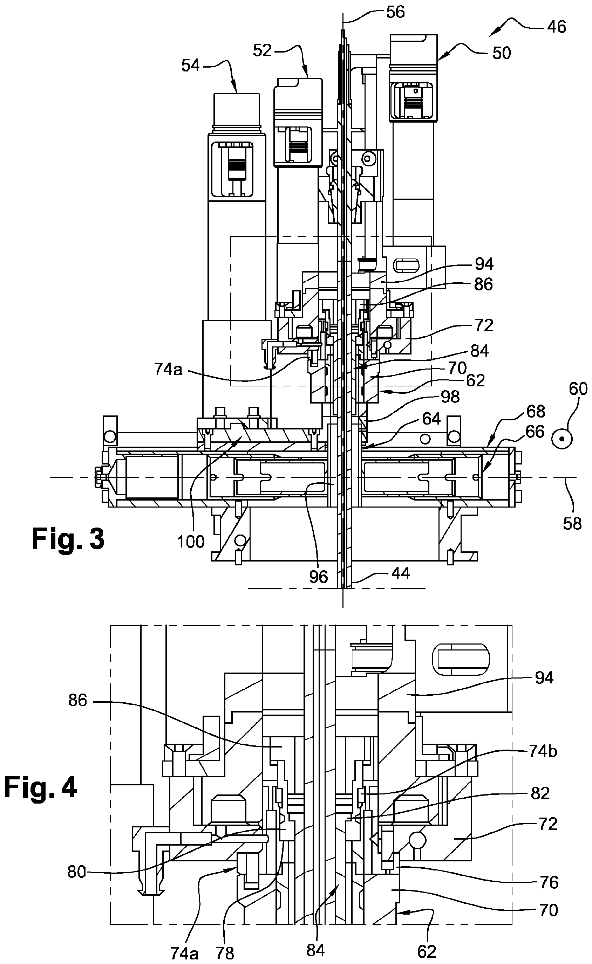

La figure 3 représente le dispositif 46 de la figure 3, vu en coupe selon un plan comprenant le premier axe 56 et le second axe 58. Le dispositif 46 comprend une première partie tubulaire 62 s'étendant selon le premier axe 56 et se prolongeant par une seconde partie tubulaire 64 traversant à étanchéité un coulisseau cylindrique 66 monté à coulissement dans une coulisse 68, le coulisseau 66 étant apte à se déplacer selon le second axe 58.

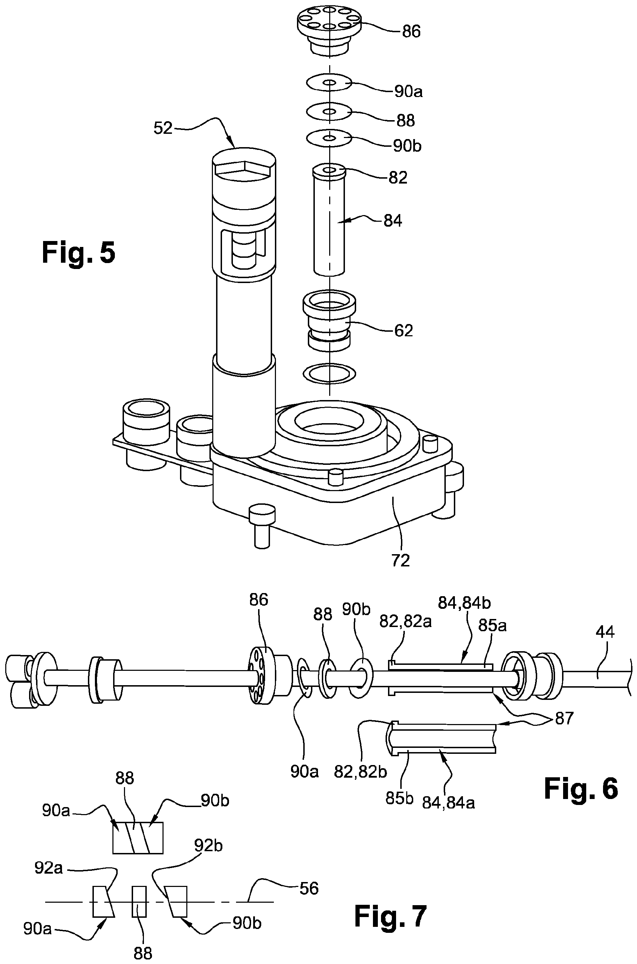

Plus précisément, la première partie tubulaire 62 comprend un corps tubulaire 70 formée à l'extrémité radialement interne de celui-ci et rendue solidaire d'une première platine 72 supportant la tige 44 de mesure à translation selon le premier axe 56 et en rotation autour du premier axe 56 (figure 4). La première platine 72 comprend une ouverture centrée sur le premier axe 56 et dans laquelle sont engagées coaxialement au premier axe 56 une première pièce tubulaire 74a et une seconde pièce tubulaire 74b, la première pièce tubulaire 74a entourant la seconde pièce tubulaire 74b. Comme cela peut être observée sur la figure 4, la première pièce tubulaire 74a comprend à son extrémité radialement interne un rebord annulaire 76 serré entre le corps tubulaire 62 et la première platine 72. Egalement, la première pièce tubulaire 74a comporte un épaulement 78 annulaire radial et interne sur lequel est monté en appui radialement vers l'intérieur l'extrémité radialement interne ou première extrémité de la seconde pièce tubulaire 74b. De même, cette première extrémité de la seconde pièce tubulaire 74b comprend un épaulement annulaire 80 sur lequel est monté en appui radialement vers l'intérieur un rebord annulaire radial 82 d'un tube 84 de guidage à coulissement ajusté de la tige 44 selon le premier axe 56 et dans lequel la tige 44 est engagée. Comme cela est mieux visible en figure 6, le tube de guidage 84 est formé en deux parties 84a, 84b afin de permettre un montage du tube de guidage 84 autour de la tige 44 puisque celui-ci comprend les moyens de mesure de caractéristiques de l'écoulement d'air dans sa partie radialement interne destinée à être montée à l'intérieur de la veine.. Chaque partie 84a, 84b de tube 84 comprend une portion semicylindrique 85a, 85b reliée à une extrémité à un rebord 82a, 82b radial semiannulaire. Les rebords 82a, 82b définissent ensemble le rebord annuaire 82 et les portions semi-cylindriques 85a, 85b forment une portion cylindrique 87. La seconde extrémité ou extrémité radialement externe de la seconde pièce tubulaire 74b reçoit un écrou 86 permettant le serrage d'un joint 88 intercalé entre deux bagues 90a, 90b. Lesdites deux bagues 90a, 90b, le joint 88 et l'écrou 86 sont bien évidement coaxial au premier axe 56 et sont montés autour de la tige 44. La tige 44 est montée à glissement ajusté, c'est-à-dire sans jeu dans le tube 84 de guidage ce qui lui permet de coulisser librement mais d'éviter toute remontée d'air chaud depuis la veine annulaire d'air.

Comme représenté en figure 7, le joint 88 est sensiblement plan au repos et comprend deux faces opposées sensiblement planes. Les deux bagues 90a, 90b comprennent quant à elles chacune une face 92a, 92b inclinée en oblique par rapport au premier axe 56, lesdites deux faces 92a, 92b inclinées de manière similaire c'est-à-dire de manière à ce que l'angle entre elles soit proche de zéro. Cette conformation des bagues 90a, 90b permet d'assurer un écrasement optimal du joint 88 et par suite améliorer l'étanchéité.

La première platine 72 porte une embase 94 montée tournante selon le premier axe 56. Cette embase 94 supporte le premier actionneur 50 portant la tige 44 et permettant son déplacement à translation dans la première partie tubulaire 62. La première platine 72 porte le second actionneur 52 permettant de faire tourner l'embase 94 autour du premier axe 56. De cette manière, il est possible d'orienter de manière optimale les moyens de mesure de la tige 44 de mesure par rapport au sens d'écoulement d'air dans la veine annulaire d'air.

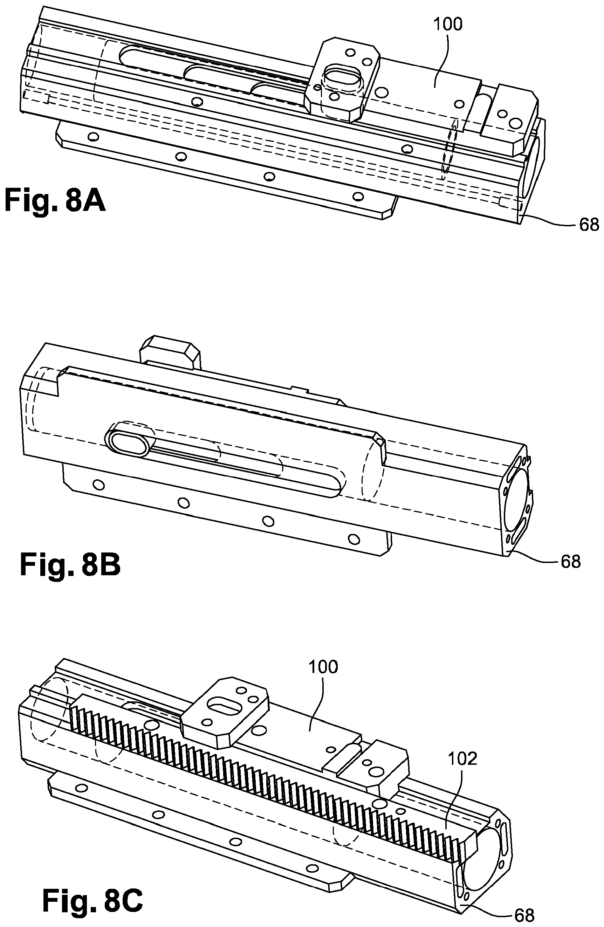

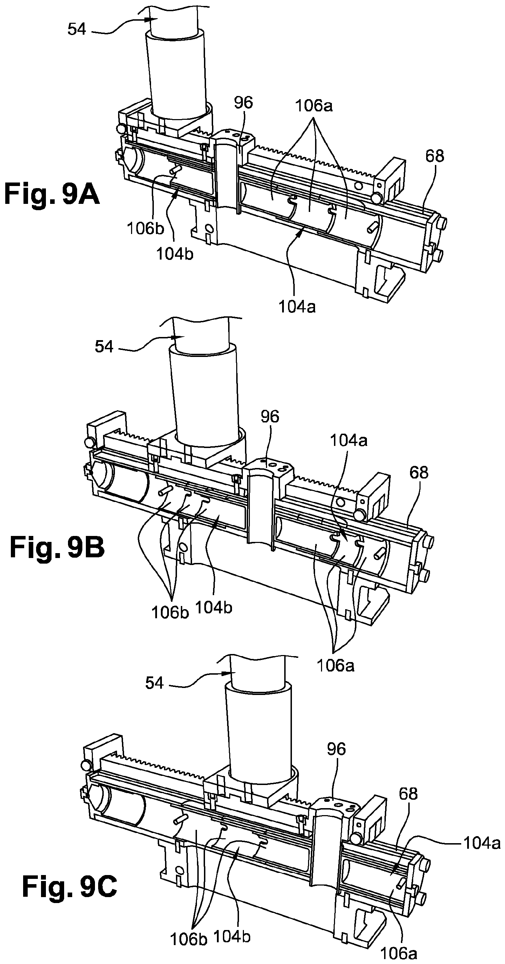

La seconde partie tubulaire 64 comprend un tube 96 monté en butée radialement vers l'extérieur dans une portion tubulaire 98 d'une seconde platine 100 apte à se déplacer selon le second axe 58. Cette seconde platine 100 porte le troisième actionneur 54 lequel permet, par l'intermédiaire d'un système à crémaillère 102 le déplacement de la seconde partie tubulaire 64 selon le second axe 58 (figures 8 et 9). La crémaillère 102 est ici portée par la coulisse 68.

Le coulisseau cylindrique 66 est monté dans la coulisse 68 de forme également cylindrique et comprend une première partie 104a de coulisseau et une seconde partie 104b de coulisseau à tubes cylindriques télescopiques, c'est-à-dire dont les tubes 106a, 106b constitutifs s'emboîtent et coulissent les uns dans les autres. Chaque partie 104a, 104b de coulisseau comprend trois tubes 106a, 106b emboités les uns dans les autres. Les deux parties 104a, 104b de coulisseau à tubes télescopiques sont solidaires par une extrémité au tube 96 coaxial au premier axe 56 de manière à assurer une étanchéité à l'air de la veine annulaire. Comme cela est visible en figure 3, le tube 96 est dimensionné de manière à ce que la tige 44 soit entourée avec jeu par le tube 44. L'utilisation de coulisseaux à tubes télescopiques présente l'avantage de mieux répartir la pression de la veine annulaire d'air et de réduire fortement l'impact de celle-ci sur le déplacement à coulissement des tubes élémentaires 106a, 106b de chaque partie de coulisseau 104a, 104b les uns par rapport aux autres. Dans un exemple de réalisation, les tubes 106a, 106b sont usinés avec un jeu compris entre 8 et 15 µm de manière à garantir un coulissement et une absence de fuite.

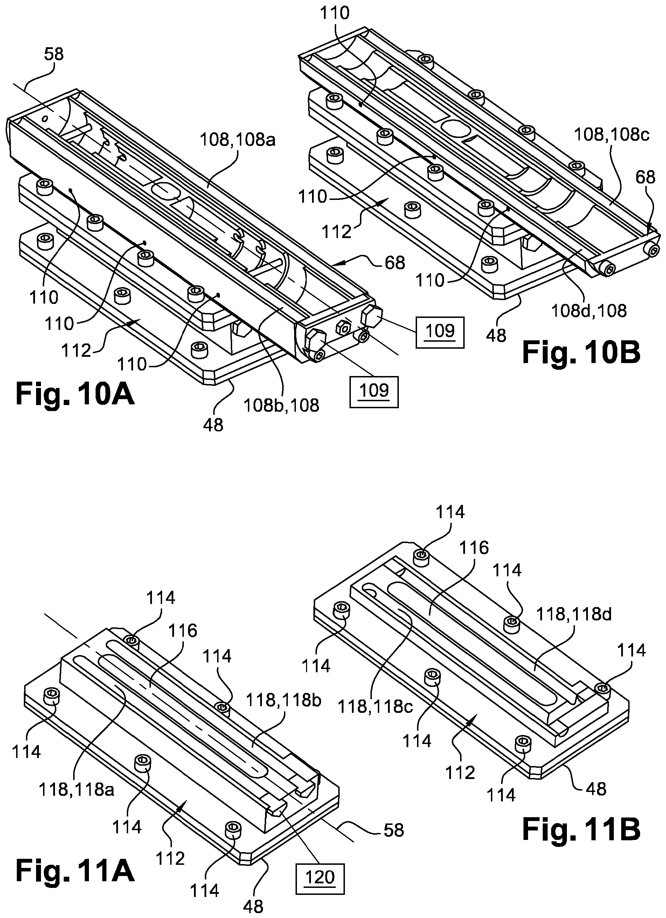

Pour limiter l'échauffement en fonctionnement du dispositif 46, il est prévu un premier circuit de refroidissement à l'air (figures 10A et 10B) et un premier circuit de refroidissement par un liquide tel que de l'eau (figures 11A et 11B). Ainsi, la coulisse 68 comprend, dans sa partie médiane, un premier circuit d'air 108 de refroidissement comportant quatre canaux 108a, 108b, 108c, 108c s'étendant selon le second axe 58. Le circuit d'air est en pratique formé de deux sous-circuit fluidiquement indépendants l'un de l'autre. Le premier sous-circuit comprend les canaux 108a et 108c et le second sous circuit comprend les canaux 108b et 108d. Les canaux 108a et 108b sont reliés à une extrémité à des moyens 109 d'alimentation en air sous pression et sont respectivement reliés aux canaux 108c et 108d, ces derniers canaux étant reliés à l'atmosphère extérieur par des orifices 110 formés dans la coulisse 68 (figures 10A et 10B). De cette manière, la coulisse 68 peut être refroidie en fonctionnement.

Le dispositif 46 selon l'invention est intégralement supporté par une semelle 112 de fixation au carter dont on peut voir sur les figures 11A et 11B les éléments 114 de boulonnage. Cette semelle 112 comprend une ouverture centrale 116 permettant le passage de la tige 44 instrumentée. Le premier circuit 118 de refroidissement à l'eau comprend quatre canaux 118a, 118b, 118c, 118d formés dans l'épaisseur de la semelle 112 et s'étendant selon le second axe 56. Un premier canal 118a et un deuxième canal 118b sont formés au niveau d'un même premier plan transverse au premier axe 54. Un troisième canal 118c et un quatrième canal 118d sont formés au niveau d'un même second plan transverse au premier axe 54. Le premier plan est situé radialement à l'extérieur du second plan. Le premier canal 118a est relié à des moyens d'alimentation 120 en eau de refroidissement de la semelle 112, l'eau s'écoulant ensuite dans le troisième canal 118c puis dans le quatrième canal 118d et enfin dans le deuxième canal 118b et sort par une extrémité de celui-ci. Ainsi, la semelle 112 est refroidie en fonctionnement permettant de faciliter les phases de tests de la turbomachine.

On remarque sur les figures 10A, 10B, 11A et 11B que le premier circuit 108 de refroidissement à l'air pour être utilisé sans que le premier 118 circuit de refroidissement à l'eau soit utilisé. Pour cela, il suffit de ne pas intercaler la semelle 112 entre le carter 48 et le premier circuit 108. Bien évidemment, l'intégration du premier circuit 118 de refroidissement à l'eau permet de limiter encore davantage l'échauffement du dispositif 48 selon l'invention du fait, notamment, de la conduction thermique plus élevée de l'eau par rapport à l'air.

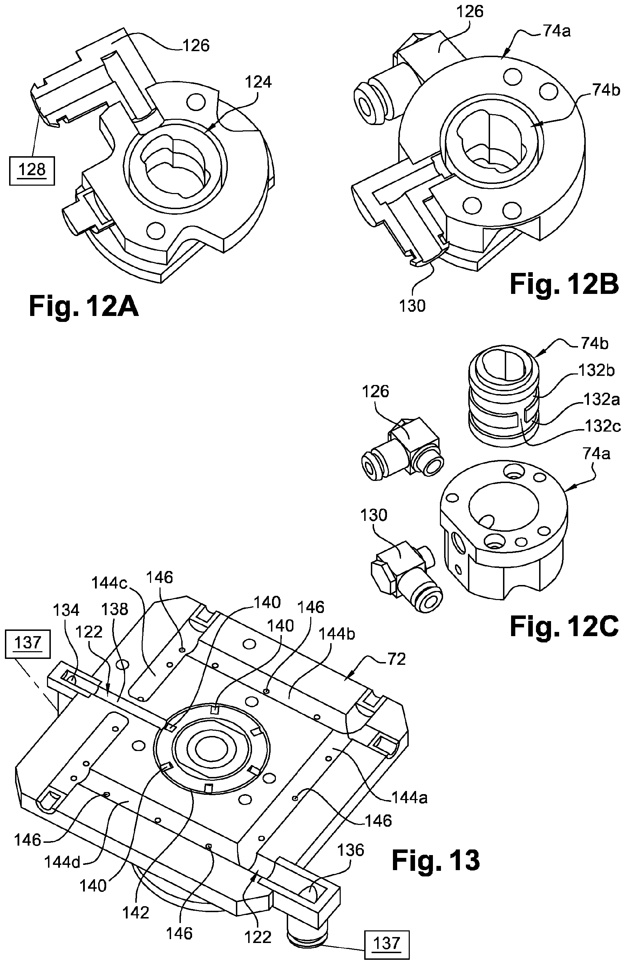

Le dispositif 46 comprend également un second circuit de refroidissement à l'air 122 et un second circuit de refroidissement par un liquide 124 tel que de l'eau. Le second circuit de refroidissement à l'eau 124 est formé au niveau des première 74a et seconde 74b pièces tubulaires comme cela peut être observé sur les figures 12A, 12B et 12C. La première pièce tubulaire 74a comprend un embout 126 latéral d'entrée du liquide de refroidissement relié à des moyens 128 d'alimentation en liquide de refroidissement et un embout 130 latéral de sortie de liquide. L'embout d'entrée 126 est placé en-dessous de l'embout 128 de sortie de manière à permettre un écoulement du liquide du bas vers le haut. Comme cela est visible sur la figure 12C, la seconde pièce tubulaire 74b comprend une gorge annulaire 132a inférieure et une gorge annulaire 132b supérieure reliées l'une à l'autre par des rainures 132c axiales. Ces gorges 132a, 132b et rainures 132c délimitent avec une face interne de la première pièce tubulaire 74a le circuit dans lequel le liquide de refroidissement est apte à circuler. Ainsi, le liquide de refroidissement s'écoule depuis l'embout d'entrée 126 dans la gorge annulaire inférieure 132a, puis au travers des rainures 132c et circule ensuite dans la gorge annulaire supérieure 132b pour sortir par l'embout 130 supérieur.

La figure 13 représente la première platine 72 selon un plan de coupe perpendiculaire au premier axe 54. Comme cela est visible, la première platine 72 porte un premier embout 134 d'entrée d'air et un second embout 136 d'entrée d'air s'étendant depuis des bords opposés de la première platine 72 et chacun relié à des moyens 137 d'alimentation en air. Le premier embout 134 d'entrée d'air communique avec un canal 138 de jonction avec une gorge annulaire 142 reliant fluidiquement des perçages 140 formés dans l'épaisseur de la paroi de la première pièce tubulaire 74a et débouchant selon le premier axe 54 et vers le haut dans l'espace annulaire entre l'embase 94 et la tige 44. Le second embout 136 d'entrée d'air communique avec des canaux 144a, 144b, 144c, 144d axiaux reliés les uns aux autres et formant ensemble un motif carré. Des perçages 146 sont formés dans l'épaisseur de la première platine 72 et débouchent dans un premier sens du premier axe 54 sur la face inférieure de la première platine 72 et dans un second sens dans les canaux 144a, 144b, 144c, 144d. Ainsi, l'air entrant par le second embout 136 circule dans les canaux 144a, 144b, 144c, 144d et refroidit la première platine 72 et sort par les perçages 146.

Dans un mode de réalisation particulier du dispositif précédemment décrit, celui-ci pourrait comprendre seulement l'un ou au moins l'un du premier circuit 108 de refroidissement à l'air, du premier circuit 118 de refroidissement par un liquide, du second circuit 122 de refroidissement à l'air, du second circuit 124 de refroidissement par un liquide.

## Revendications

1. Dispositif (46) de mesure des caractéristiques d'un flux d'air d'une veine annulaire de turbomachine, comprenant une tige (44) s'étendant selon un premier axe (56) donné, portant des moyens de mesure de caractéristiques d'un flux d'air et engagée à coulissement à étanchéité dans une première partie tubulaire (62) se prolongeant par une seconde partie tubulaire (64) traversant à étanchéité selon le premier axe (56) un coulisseau (66) monté à coulissement dans une coulisse selon un second axe (58) perpendiculaire audit premier axe (56), ladite tige (44) étant engagée avec un jeu annulaire dans ladite seconde partie tubulaire (64).

2. Dispositif selon la revendication 1, dans lequel le coulisseau (66), de préférence cylindrique, comprend une première partie (104a) de coulisseau à tubes télescopiques et une seconde partie (104b) de coulisseau à tubes télescopiques, lesdites première (104a) et seconde (104b) parties de coulisseau à tubes télescopiques étant fixées à étanchéité par une extrémité axiale à ladite seconde partie tubulaire (64).

3. Dispositif selon la revendication 1 ou 2, dans lequel la première partie tubulaire (62) comprend une première platine (72) de support supportant en rotation autour du premier axe (54) un premier actionneur (50) de déplacement à translation de la tige (44) selon ledit premier axe (54).

4. Dispositif selon la revendication 3, dans lequel la première platine (72) comprend un circuit (122) apte à permettre une circulation d'air et destiné à être relié à des moyens (137) d'alimentation en air.

5. Dispositif selon la revendication 3 ou 4, dans lequel une première pièce tubulaire (74a) et une seconde pièce tubulaire (74b) sont montées coaxialement au premier axe (54) autour de la tige (44), la première pièce tubulaire (74a) entourant la seconde pièce tubulaire (74b) et délimitant avec celle-ci un circuit (124) apte à permettre une circulation d'un liquide de refroidissement lequel est destiné à être relié à des moyens (128) d'alimentation en liquide de refroidissement.

6. Dispositif selon les revendications 4 et 5, dans lequel la première pièce tubulaire (74a) est insérée dans une ouverture de la première platine (72) et est rendue solidaire de ladite première platine (72).

7. Dispositif selon l'une des revendications 1 à 6, dans lequel la première partie tubulaire (62) loge intérieurement un tube de guidage (84) dans lequel la tige (44) est montée à glissement ajusté.

8. Dispositif selon la revendication 7 en combinaison avec la revendication 5, dans lequel le tube (84) de guidage comprend un rebord annulaire (82) monté serré entre un épaulement annulaire (80) d'une première extrémité de la seconde pièce tubulaire (74a) et un écrou (86) de serrage vissé à une seconde extrémité de ladite seconde pièce tubulaire (74b).

9. Dispositif selon la revendication 8, dans lequel un joint (88) d'étanchéité est monté autour de la tige (44) et compressé selon ledit premier axe (54) entre deux bagues (90a, 90b), lesdites deux bagues (90a, 90b) et le joint (88) étant intercalés entre ledit rebord annulaire (82) du tube (84) de guidage et l'écrou (86).

10. Dispositif selon l'une des revendications 1 à 9, dans lequel la seconde partie tubulaire (64) est solidaire d'une seconde platine (100) montée à déplacement selon le second axe (56) par l'intermédiaire d'un système à crémaillère.

11. Dispositif selon l'une des revendications 1 à 10, comprenant une semelle (112) fixée à une face de la coulisse (68) opposée à celle supportant la première partie tubulaire (62), ladite semelle (112) comprenant une ouverture traversée par la tige (44) et un circuit (118) apte à permettre une circulation d'un liquide de refroidissement et destiné à être relié à des moyens (120) d'amenée d'un fluide de refroidissement.

12. Dispositif selon l'une des revendications 1 à 11, dans lequel la coulisse (68) comprend un circuit (108) apte à permettre une circulation d'air et relié à des moyens (109) d'alimentation en air de refroidissement.

13. Veine d'écoulement d'air, pour turbomachine, comprenant deux parois annulaires interne et externe coaxiales, et un dispositif (46) selon l'une des revendications 1 à 12, dans lequel la coulisse (68) est fixée sur une face radialement externe de la paroi annulaire externe (48) et la tige (44) traversant ladite paroi annulaire externe (48) de manière à ce que son extrémité libre soit agencée entre lesdites deux parois annulaires interne et externe.

## Patentansprüche

1. Vorrichtung (46) zur Messung der Eigenschaften eines Luftstroms in einem ringförmigen Strömungskanal einer Turbomaschine bzw. eines Turbotriebwerks, enthaltend einen Schaft (44), der sich entlang einer ersten gegebenen Achse (56) erstreckt, Mittel zur Messung der Eigenschaften eines Luftstroms trägt und abgedichtet gleitbeweglich in einen ersten rohrförmigen Abschnitt (62) eingreift, der sich in einen zweiten rohrförmigen Abschnitt (64) fortsetzt, welcher entlang der ersten Achse (56) einen Schieber (66) abgedichtet durchsetzt, der entlang einer senkrecht zur ersten Achse (56) verlaufenden zweiten Achse (58) gleitbeweglich in einer Kulisse gelagert ist, wobei der Schaft (44) mit ringförmigem Spiel in den zweiten rohrförmigen Abschnitt (64) eingreift.

2. Vorrichtung nach Anspruch 1,
wobei der vorzugsweise zylindrische Schieber (66) einen ersten Teleskoprohrschieberabschnitt (104a) und einen zweiten Teleskoprohrschieberabschnitt (104b) umfasst, wobei der erste (104a) und der zweite (104b) Teleskoprohrschieberabschnitt mit einem axialen Ende an dem zweiten rohrförmigen Abschnitt (64) abgedichtet befestigt sind.

3. Vorrichtung nach Anspruch 1 oder 2,
wobei der erste rohrförmige Abschnitt (62) eine erste Trägerplatine (72) umfasst, die einen ersten Aktuator (50) zur Verschiebung des Schafts (44) entlang der ersten Achse (54) um die erste Achse (54) drehbar trägt.

4. Vorrichtung nach Anspruch 3,
wobei die erste Platine (72) eine Zirkulationsstrecke (122) umfasst, die eine Luftzirkulation ermöglichen kann und dazu bestimmt ist, mit Mitteln (137) zur Luftzufuhr verbunden zu werden.

5. Vorrichtung nach Anspruch 3 oder 4,
wobei ein erstes rohrförmiges Teil (74a) und ein zweites rohrförmiges Teil (74b) koaxial zur ersten Achse (54) um den Schaft (44) herum angebracht sind, wobei das erste rohrförmige Teil (74a) das zweite rohrförmige Teil (74b) umgibt und mit diesem eine Zirkulationsstrecke (124) begrenzt, die eine Zirkulation einer Kühlflüssigkeit ermöglichen kann und dazu bestimmt ist, mit Mitteln (128) zur Zufuhr von Kühlflüssigkeit verbunden zu werden.

6. Vorrichtung nach Anspruch 4 und 5,
wobei das erste rohrförmige Teil (74a) in eine Öffnung der ersten Platine (72) eingeführt und fest mit der ersten Platine (72) verbunden ist.

7. Vorrichtung nach einem der Ansprüche 1 bis 6,
wobei der erste rohrförmige Abschnitt (62) innen ein Führungsrohr (84) aufnimmt, in dem der Schaft (44) passgenau gleitbeweglich gelagert ist.

8. Vorrichtung nach Anspruch 7 in Kombination mit Anspruch 5,
wobei das Führungsrohr (84) einen ringförmigen Flansch (82) aufweist, der zwischen einer ringförmigen Schulter (80) eines ersten Endes des zweiten rohrförmigen Teils (74a) und einer Spannmutter (86), die auf ein zweites Ende des zweiten rohrförmigen Teils (74b) geschraubt ist, verspannt ist.

9. Vorrichtung nach Anspruch 8,
wobei eine Dichtung (88) um den Schaft (44) herum angebracht ist und entlang der ersten Achse (54) zwischen zwei Ringen (90a, 90b) zusammengedrückt wird, wobei die beiden Ringe (90a, 90b) und die Dichtung (88) zwischen dem ringförmigen Flansch (82) des Führungsrohrs (84) und der Mutter (86) eingefügt sind.

10. Vorrichtung nach einem der Ansprüche 1 bis 9,
wobei der zweite rohrförmige Abschnitt (64) über ein Zahnstangensystem fest mit einer zweiten Platine (100) verbunden ist, die entlang der zweiten Achse (56) verstellbar gelagert ist.

11. Vorrichtung nach einem der Ansprüche 1 bis 10,
enthaltend einen Sockel (112), der an eine Seite der Kulisse (68) befestigt ist, die derjenigen gegenüberliegt, die den ersten rohrförmigen Abschnitt (62) trägt, wobei der Sockel (112) eine vom Schaft (44) durchquerte Öffnung und eine Zirkulationsstrecke (118) umfasst, die eine Zirkulation einer Kühlflüssigkeit ermöglichen kann und dazu bestimmt ist, mit Mitteln (120) zur Zufuhr eines Kühlmittels verbunden zu werden.

12. Vorrichtung nach einem der Ansprüche 1 bis 11,
wobei die Kulisse (68) eine Zirkulationsstrecke (108) umfasst, die eine Luftzirkulation ermöglichen kann und mit Mitteln (109) zur Zufuhr von Kühlluft verbunden ist.

13. Luftströmungskanal für eine Turbomaschine bzw. ein Turbotriebwerk, enthaltend zwei koaxial verlaufende, ringförmige Wände, nämlich eine innere und eine äußere, und eine Vorrichtung (46) nach einem der Ansprüche 1 bis 12,
wobei die Kulisse (68) an einer radial äußeren Seite der äußeren ringförmigen Wand (48) befestigt ist und der Schaft (44) die äußere ringförmige Wand (48) so durchsetzt, dass sein freies Ende zwischen den beiden ringförmigen Wänden, der inneren und der äußeren, angeordnet ist.

## Claims

1. Device (46) for measuring the characteristics of an air flow of an annular stream of a turbomachine, comprising a rod (44) extending along a first given axis (56), carrying means for measuring the characteristics of an air flow and sealingly slidingly engaged in a first tubular part (62) extending into a second tubular part (64) passing sealingly along the first axis (56) through a slider (66) mounted slidingly in a slide along a second axis (58) perpendicular to said first axis (56), said rod (44) being engaged with an annular clearance in said second tubular part (64).

2. Device according to claim 1, wherein the slider (66) is preferably cylindrical and comprises a first telescopic tube slider part (104a) and a second telescopic tube slider part (104b), said first (104a) and second (104b) telescopic tube slider parts being sealingly attached at one axial end to said second tubular part (64).

3. Device according to claim 1 or 2, in which the first tubular part (62) comprises a first support plate (72) supporting in rotation about the first axis (54) a first actuator (50) for translational displacement of the rod (44) along said first axis (54).

4. Device according to claim 3, in which the first plate (72) comprises a circuit (122) capable of allowing air circulation and intended to be connected to air supply means (137) .

5. Device according to claim 3 or 4, wherein a first tubular part (74a) and a second tubular part (74b) coaxial to the first axis (54) are mounted around the rod (44), the first tubular part (74a) surrounding the second tubular part (74b) and delimiting with the latter a circuit (124) capable of allowing a circulation of a cooling liquid which is intended to be connected to means (128) for supplying cooling liquid.

6. Device according to claims 4 and 5, wherein the first tubular part (74a) is inserted into an opening of the first plate (72) and is made integral with said first plate (72) .

7. Device according to one of claims 1 to 6, wherein the first tubular part (62) internally accommodates a guide tube (84) in which the rod (44) is slidably mounted in a close fit.

8. Device according to claim 7 in combination with claim 5, wherein the guide tube (84) comprises an annular flange (82) clamped between an annular shoulder (80) at a first end of the second tubular part (74a) and a clamping nut (86) screwed to a second end of said second tubular part (74b) .

9. Device according to claim 8, wherein a seal (88) is mounted around the rod (44) and compressed along said first axis (54) between two rings (90a, 90b), said two rings (90a, 90b) and the seal (88) being interposed between said annular flange (82) of the guide tube (84) and the nut (86).

10. Device according to one of claims 1 to 9, in which the second tubular part (64) is integral with a second plate (100) mounted so as to be displaceable along the second axis (56) by means of a rack and pinion system.

11. Device according to one of claims 1 to 10, comprising a sole (112) fixed to a face of the slide (68) opposite that supporting the first tubular part (62), said sole (112) comprising an opening through which the rod (44) passes and a circuit (118) capable of allowing a cooling liquid to circulate and intended to be connected to means (120) for supplying a cooling fluid.

12. Device according to one of claims 1 to 11, wherein the first slide (68) comprises a circuit (108) capable of allowing air circulation and intended to be connected to cooling air supply means (109).

13. Air flow duct for a turbomachine, comprising two coaxial inner and outer annular walls, and a device (46) according to one of claims 1 to 12, the slide (68) being fixed to a radially outer face of the outer annular wall (48) and the rod (44) passing through said outer annular wall (48) so that its free end is arranged between said two inner and outer annular walls.
